# EUROPEAN PATENT SPECIFICATION

(11) **EP 2 747 417 B1**
(45) Date of publication and mention of the grant of the patent: **08.02.2017**
(21) Application number: 13198065.8
(22) Date of filing: 18.12.2013
(51) Int. Cl.: H04N 5/232

(54) **Combined rectification and video stabilisation**
Kombinierte Rektifikation und Videostabilisierung
Stabilisation vidéo et redressement combiné

(30) Priority: 18.12.2012 EP 12306615
(43) Date of publication of application: 25.06.2014
(73) Proprietor: OCT Circuit Technologies International Limited, Dublin 18 (IE)
(72) Inventor: Auberger, Stéphane, 93160 NOISY LE GRAND (FR); Alibay, Manu, 75020 PARIS (FR)
(74) Representative: Grünecker Patent- und Rechtsanwälte PartG mbB

(56) References cited:
- US-A1- 2007 154 202
- US-A1- 2011 176 014
- US-A1- 2011 211 082
- US-A1- 2011 267 514
- US-B1- 6 628 711

## Description

### Field of the Invention

This invention generally relates to rectification and stabilisation of video sequences. It finds applications, in particular, in algorithms used in Integrated Circuits (IC) for user devices having a capacity of handling, i.e., acquiring, processing and/or playing videos, such as Digital Still Camera (DSC), mobile and portable device's camera, digital camcorder, etc.

### Background of the Invention

There is a growing need for image sensors due to the increasing demand for video cameras, for example, in consumer electronics (e.g., smartphones, tablets). Nowadays, complementary metal-oxide semiconductor (CMOS) technology is widely used because CMOS sensors provide low-cost and low-power solutions for various applications along with the ability to integrate with image processing circuits. However, most CMOS sensors adopt a rolling shutter mechanism wherein detector rows are read and reset sequentially, thus making the capture time of each row slightly after the capture time of the previous row. This contrasts with global shutter wherein all rows are acquired during the same capture time. The use of rolling shutter causes problems when the scene changes in a time which is less than that taken to expose the entire. Indeed, when camera or objects moves during image capture, the scene imaged by each row presents relative motion, resulting in geometric distortion in the acquired image called rolling shutter distortion. Such undesirable distortion seriously degrades the visual quality of the acquired images. The image deformation caused by rolling shutter may be rectified by means of image processing by computing the relative displacements between rows in an image. Examples of such methods may be found in "Removing Rolling-shutter Wobble", Simon Baker, Eric Bennett, Sing Bing Kang, and Richard Szeliski, Microsoft Research, Technical Report, MSR-TR-2010-28, March 2010. Jitter, on the other hand, is the result of undesirable movement during capture of a video which is typically due to unsteady hand movement or the like. To deal with jitter, it is commonly employed video stabilisation algorithms. The goal of video stabilisation is to reduce or eliminate unwanted jitter by estimating motion between consecutive video frames, and providing compensation for the estimated motion prior to sequential display of the video images. Examples of known video stabilisation algorithms may be find in "Digital Video Stabilisation Architecture for Low Cost Devices", Stéphane Auberger, Carolina Miro, Proceedings of the 4th International Symposium on Image and Signal Processing and Analysis (ISPA).

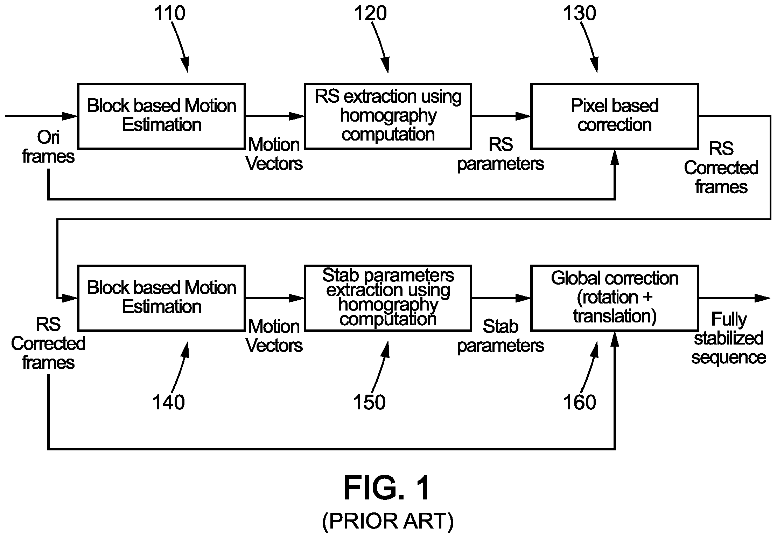

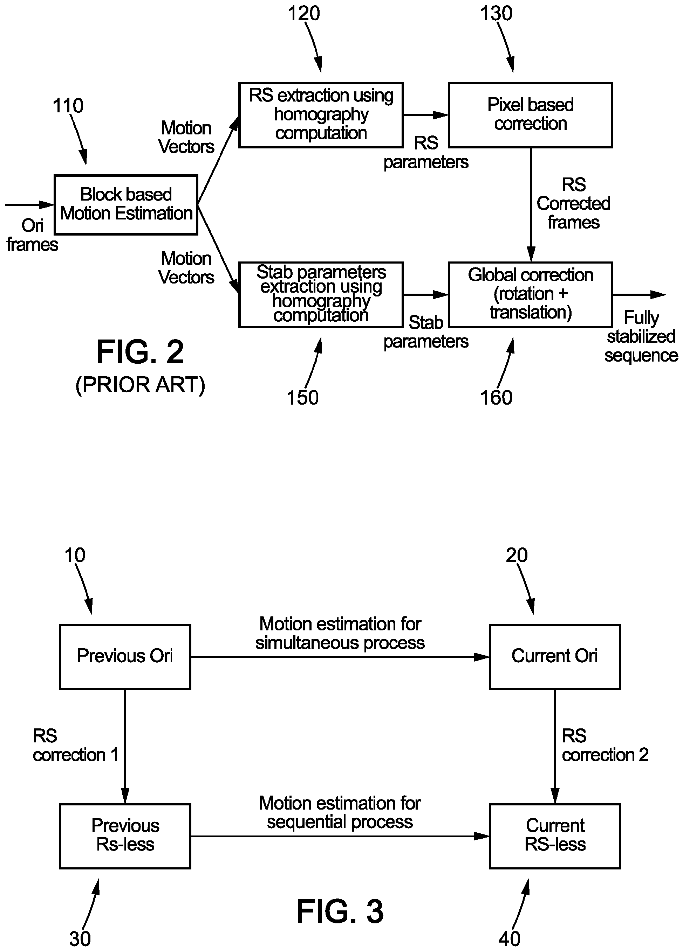

Rolling shutter rectification and video stabilisation algorithms may be combined as they both lead to provide a sense of stabilisation to the video. Moreover, in embedded systems for instance, both video stabilisation and rolling shutter rectification could be performed at the same time, in real time. Indeed, both algorithms have a similar structure:
- a step of motion estimation which outcome is a motion vector field comprising motion vectors;
- a step of extraction of rectification or stabilisation parameters (RS parameters, Stab parameters) based on the motion vectors; and,
- a step of compensation of the artefacts in the image based on the rectification or stabilisation parameters.
A simple way to achieve good results can be to perform both algorithms sequentially: first the rolling shutter rectification on the full video sequence and then video stabilisation on the rectified video sequence, as shown in FIG. 1. However, in such solutions, the motion estimation step, which is a costly operation, is performed twice. In another solution, the motion estimation step could be shared by each algorithm, thus performing simultaneously and only once the motion estimation as illustrated by FIG. 2. However, by sharing the motion estimation step, one can see a dramatic loss of accuracy of the video stabilisation compared to the sequential solution. This is due to the fact that motion estimation for video stabilisation in the sequential solution is performed between two images of the video sequence which have been rectified with respect to the rolling shutter distortions. In contrast, in the simultaneous solution of FIG. 2, motion estimation for video stabilisation is performed between two original images (Ori frames) which have not been rectified in rolling shutter. The foregoing difference is exemplified in FIG. 3. It would thus be advantageous to provide a simultaneous solution having similar performance properties to the sequential solution. Patent application US 2011/267514 A1 discloses a blended method of performing both algorithms.

### Summary of the Invention

The present subject application provides an apparatus and a method of rectifying and stabilising a video sequence comprising a plurality of images acquired via a rolling-shutter mode of image capture as described in the accompanying claims. Specific embodiments of the subject application are set forth in the dependent claims.

Certain embodiments of the subject application include an apparatus for rectifying and stabilising a video sequence comprising a plurality of images acquired via a rolling-shutter mode of image capture. The apparatus comprises an image motion estimation unit configured to receive at least a previous image and a current image of the plurality of images. The image motion estimation unit is further configured to obtain one motion vector field of the current image by performing motion estimation based on the previous image and the current image. The motion vector field comprises motion vectors of respective regions of the current image. Each motion vector comprises a starting point indicative of the source of motion of a respective region between the previous image and the current image, and also an ending point indicative of the destination of motion of the respective region between the previous image and the current image. The apparatus further comprises a rolling-shutter parameter extraction unit coupled to the image motion estimation unit and configured to obtain a first rolling-shutter correction parameter of the current image based on the motion vector field. The first rolling-shutter correction parameter is indicative of the correction to be applied to the current image in order to reduce rolling-shutter distortions. The apparatus further comprises a motion vector rectification unit coupled to the image motion estimation unit and the rolling-shutter parameter extraction unit. The motion vector rectification unit is configured to alter the ending point of the motion vectors of the motion vector field based on the first rolling-shutter correction parameter, thus obtaining a rectified motion vector field. The apparatus further comprises a video stabilisation parameter extraction unit coupled to the motion vector rectification unit and configured to obtain a video stabilisation correction parameter of the current image based on the rectified motion vector field. The video stabilisation correction parameter is indicative of the correction to be applied to the current image in order to reduce image jitters due to shake during image capture. Finally, the apparatus further comprises an image correction unit coupled to the rolling-shutter parameter extraction unit and the video stabilisation parameter extraction unit. The image correction unit is configured to receive the current image and apply to the current image, the first rolling-shutter correction parameter and the video stabilisation correction parameter, thus obtaining a globally corrected current image.

In embodiments of the subject application it is further included a device comprising the apparatus of the proposed application along with a display unit coupled to the apparatus. The display unit is configured to display at least the globally corrected current image.

In certain embodiments of the subject application, it is included a method of rectifying and stabilising a video sequence comprising a plurality of images acquired via a rolling-shutter mode of image capture. The method comprises the step of receiving at least a previous image and a current image of the plurality of images. The method further comprises the step of obtaining one motion vector field of the current image by performing motion estimation based on the previous image and the current image. The motion vector field comprising motion vectors of respective regions of the current image. Each motion vector comprises a starting point indicative of the source of motion of a respective region between the previous image and the current image, and also an ending point indicative of the destination of motion of the respective region between the previous image and the current image. The method further comprises the step of obtaining a first rolling-shutter correction parameter of the current image based on the motion vector field. The first rolling-shutter correction parameter is indicative of the correction to be applied to the current image in order to reduce rolling-shutter distortions. The method further comprises the step of altering the ending point of the motion vectors of the motion vector field based on the first rolling-shutter correction parameter, thus obtaining a rectified motion vector field. The method further comprises the step of obtaining a video stabilisation correction parameter of the current image based on the rectified motion vector field. The video stabilisation correction parameter is indicative of the correction to be applied to the current image in order to reduce image jitters due to shake during image capture. Finally, the method further comprises the step of applying to the current image, the first rolling-shutter correction parameter and the video stabilisation correction parameter.

Certain embodiments of the subject application also include a non-transitory computer readable medium having stored thereon instructions for causing one or more processing units to execute the method of the subject application.

These and other aspects of the subject application will be apparent from an elucidated with reference to the embodiments described hereinafter.

### Brief Description of the Drawings

Further details, aspects and embodiments of the proposed solution will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 is a schematic diagram of a prior art sequential implementation of rolling shutter and video stabilisation algorithms.
FIG. 2 is a schematic block diagram of a prior art simultaneous implementation of rolling shutter and video stabilisation algorithms.
FIG. 3 is a schematic block diagram showing a comparison between the prior arts implementations of FIG. 1 and FIG. 2.
FIG. 4 is a schematic block diagram of a simultaneous embodiment of rolling shutter and video stabilisation algorithms in accordance with the subject application.
FIG. 5 is a schematic diagram of a motion vector rectification in accordance with the embodiment of FIG. 4.
FIG. 6 is a schematic diagram showing a comparison between the prior art implementations of FIG. 1 and the embodiment FIG. 4.
FIG. 7 is a schematic block diagram of another simultaneous embodiment of rolling shutter and video stabilisation algorithms in accordance with the subject application.
FIG. 8 is a schematic diagram of a motion vector rectification in accordance with the embodiment of FIG. 7.
FIG. 9 is a schematic flow diagram of a method according to an embodiment of the subject application.

### Detailed Description of the preferred embodiments

Because the illustrated embodiments of the subject application may for the most part, be composed of mechanisms, electronic components and circuits known to those skilled in the art, details will not be explained in any greater extent than that considered necessary for the understanding and appreciation of the underlying concepts of the subject application, in order not to obfuscate or distract from the teachings of the subject application.

Referring to FIG. 1, there is diagrammatically shown therein a prior art sequential implementation of rolling shutter and video stabilisation algorithms. Units 110, 120 and 130 are performing the rolling shutter algorithm while units 140, 150 and 160 are performing the video stabilisation algorithm. First, in unit 110 it is determined motion vectors based on original frames (Ori frames) of a video sequence using a block based motion estimation method. Then, in unit 120, rolling shutter correction parameters (RS parameters) are derived from an homography computation based on the motion vectors. Later, in unit 130, the original frames are corrected in rolling shutter based on the rolling shutter correction parameters, thus creating rolling shutter corrected frames (RS corrected frames). In unit 140, it is determined motion vectors based on the rolling shutter corrected frames using a block based motion estimation method. Then, in unit 150, video stabilisation correction parameters (Stab parameters) are derived from an homography computation of the latter motion vectors. Later, in unit 160, the rolling shutter corrected frames are corrected in video stabilisation based on the video stabilisation correction parameters, thus creating corrected frames of a fully stabilised video sequence. The implementation of FIG. 1 provides good results but at the cost of performing two times the operation of motion estimation which is quite demanding in terms of processing and resources. Indeed, motion estimation is performed once on the original frames and once on the rolling shutter corrected frames.

Referring now to FIG. 2, there is diagrammatically shown therein a prior art simultaneous implementation of rolling shutter and video stabilisation algorithms. Units 110, 120 and 130 are performing the rolling shutter algorithm while units 110, 150 and 160 are performing the video stabilisation algorithm. In comparison with FIG. 1, it can be clearly seen that unit 140 has been removed and that the whole processing is similar apart from the fact the block based motion estimation operation is performed once for both algorithms. However, as stated above, by sharing the motion estimation operation, one may notice a dramatic loss of accuracy of the video stabilisation compared to the sequential solution of FIG. 1. This can be understood by looking at FIG. 3. Indeed, in FIG. 3 it is shown that in the simultaneous solution of FIG. 2, motion estimation for video stabilisation is performed between two original images 10 and 20 ('Previous Ori' and 'Current Ori'). The term 'original' means that images 10 and 20 have not been rectified in rolling shutter before motion estimation is performed. This is not so the case in the sequential solution of FIG. 1 wherein motion estimation for video stabilisation is performed between two images 30 and 40 of the video which have been rectified in rolling shutter. This difference thus explains the poorer performance of the simultaneous solution of FIG. 2 compared to the sequential solution of FIG. 1. It is an object of the subject application to provide a simultaneous solution that is equivalent in terms of performance to sequential solution of FIG. 1.

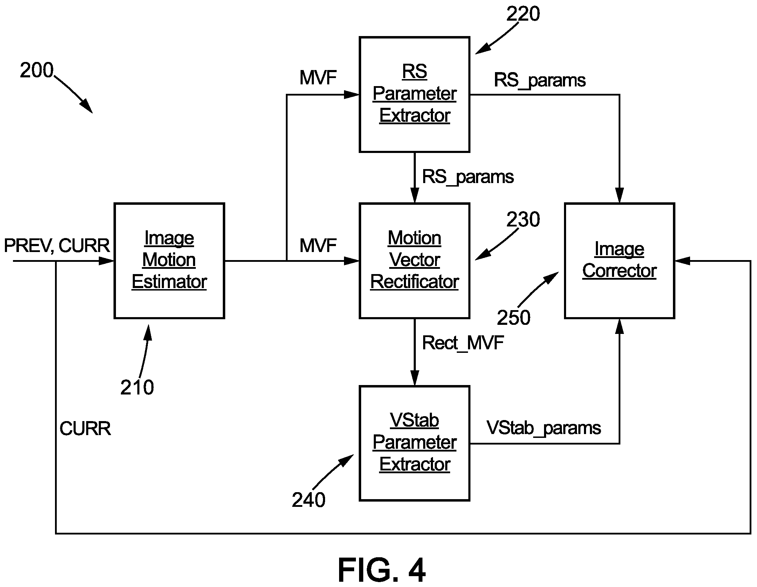

Referring now to FIG. 4, there is diagrammatically shown therein a schematic block diagram of a simultaneous embodiment of rolling shutter and video stabilisation algorithms in accordance with the subject application. The apparatus 200 of FIG. 4 as shown comprises:
- an image motion estimation unit 210;
- a rolling-shutter parameter extraction unit 220 coupled to the image motion estimation unit 210;
- a motion vector rectification unit 230 coupled to the image motion estimation unit 210 and the rolling-shutter parameter extraction unit 220;
- a video stabilisation parameter extraction unit 240 coupled to the motion vector rectification unit 230 ; and,
- an image correction unit 250 coupled to the rolling-shutter parameter extraction unit 220 and the video stabilisation parameter extraction unit 240.

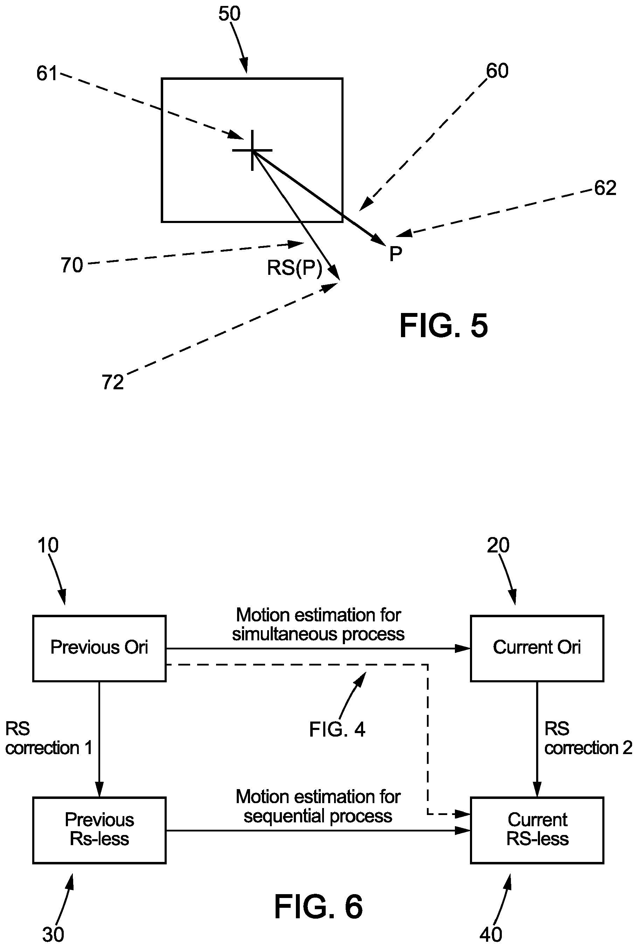

In the example of FIG. 4 as shown, the image motion estimation unit 210 is configured to receive at least a previous image PREV and a current image CURR of a plurality of images. The plurality of images may have been acquired via a rolling-shutter mode of image capture. For instance, the plurality of images may be acquired by a metal oxide semiconductor-based (CMOS) image sensor coupled to the image motion estimation unit 210 and the image correction unit 250. The image motion estimation unit 210 is further configured to obtain one motion vector field MVF of the current image CURR by performing motion estimation based on the previous image PREV and the current image CURR. The motion vector field MVF comprises motion vectors 60 of respective regions 50 of the current image CURR. In an example, motion estimation may be block-based by comparing blocks of the current image CURR against similar blocks in the previous image PREV. In that case, the current image CURR may be initially divided into multiple regions or blocks (e.g., 8x8 pixel blocks or 16×16 pixel blocks). Each of the regions (e.g., blocks 50) may have an associated motion vector 60 as illustrated in FIG. 5 and which comprises:
- a starting point 61 indicative of the source of motion of a respective region 50 between the previous image PREV and the current image CURR; and,
- an ending point 62 indicative of the destination of motion of the respective region 50 between the previous image PREV and the current image CURR.
However, the subject application is not limited to block-based motion and others motion estimation techniques may be used as well. In other words, the proposed solution may be embodied with various method of motion estimation. Indeed, at least part of the contribution of the proposed solution to art of image correction does not rely on the motion estimation per se since one of the objective of the subject application is to use motion estimation operation only once in a simultaneous implementation of combined rolling shutter rectification and video stabilisation.

Referring back to FIG. 4, the rolling-shutter parameter extraction unit 220 as shown is configured to obtain a first rolling-shutter correction parameter RS_params of the current image CURR based on the motion vector field MVF. Namely, the first rolling-shutter correction parameter RS_params is indicative of the correction to be applied to the current image CURR in order to reduce rolling-shutter distortions. In an example, the first rolling-shutter correction parameter RS_params is obtained based on an image transformation of the motion vector field MVF. For instance, the image transformation may be an homography transformation or an affine transformation. Thereinafter, an homography transformation will be considered as the image transformation. However, other forms of image transformation are encompassed in the subject application. Until this moment, the operations of unit 110 and 120 in FIG. 2 are similar to the operations of the image motion estimation unit 210 and the operations the rolling-shutter parameter extraction unit 220. However, after this moment, both implementations differ. Indeed, in FIG. 2, the first rolling-shutter correction parameter RS_params are applied to the current image CURR in order to obtain a rolling shutter corrected image. In contrast, in the subject application, the first rolling-shutter correction parameter RS_params which is indicative of the correction to be applied to the current image CURR in order to reduce rolling-shutter distortions is sent to the motion vector rectification unit 230.

Referring to FIG. 4, the motion vector rectification unit 230 is configured to alter the ending point 62 of the motion vectors 60 of the motion vector field MVF based on the first rolling-shutter correction parameter RS_params. This results in obtaining a rectified motion vector field Rect_MVF comprising rectified motions vectors 70 as shown in FIG. 5. In the example of FIG. 5, the black arrow corresponds to a motion vector 60 of the motion vector field MVF and the grey arrow corresponds to a rectified vector 70 in the rectified motion vector field Rect_MVF. In FIG. 5, as can be clearly seen, only the ending point 62 has been altered, moving from position 62 to position 72. Indeed point P has been moved to point RS(P). In addition, it is to be noted that contrary to the prior art of FIG. 2, the first rolling-shutter correction parameter RS_params is not only applied to the current image CURR. Rather, it is also applied to the motion vector field MVF. In an example, let's consider that the ending point of the motion vector 60 of FIG. 5 is set to the 2D point (5, 10) wherein '5' corresponds to the vertical movement of an associated starting point due to motion between the previous image PREV and the current image CURR, and '10' corresponds to the horizontal movement of the associated starting point due to motion between the previous image PREV and the current image CURR. Let's also consider that the rolling-shutter parameter extraction unit 220 has determined, based on the motion vector field MVF, that the true horizontal movement of the associated starting point due to motion between the previous image PREV and the current image CURR is not '10' but rather thee pixels on left. Therefore, the new position of the ending point after being altered by the motion vector rectification unit 23 is (5, 10-3) = (5, 7). Referring to FIG. 5, the 2D point (5, 10) corresponds to the point P and the 2 point (5, 7) corresponds to the point RS(P). As can be clearly seen, the motion vector rectification unit 230 used in the subject application is not used in the prior art of FIG. 2.

In FIG. 4, the video stabilisation parameter extraction unit 240 is configured to obtain a video stabilisation correction parameter VStab_params of the current image CURR based on the rectified motion vector field Rect_MVF. Namely, the video stabilisation correction parameter VStab_params is indicative of the correction to be applied to the current image in order to reduce image jitters due to shake during image capture. In an example, the first video stabilisation correction parameter VStab_params is obtained based on an homography transformation extracted from the rectified motion vector field Rect_MVF. As can be clearly seen and contrary to the prior art of FIG. 2, the video stabilisation correction parameter VStab_params is obtained based on the rectified motion vector field Rect_MVF instead of the motion vector field MVF.

Further in FIG. 4, the image correction unit 250 is configured to receive the current image CURR and to apply to the current image CURR, the first rolling-shutter correction parameter RS_params and the video stabilisation correction parameter VStab_params, thus obtaining a globally corrected current image in rolling shutter and in video stabilisation. In an example, it is first applied the first rolling-shutter correction parameter RS_params to the current image CURR before applying the video stabilisation correction parameter VStab_params to the corrected current image. In such case, the image correction unit 250 may comprise:
- a rolling-shutter correction unit configured to apply the first rolling-shutter correction parameter RS_params to the current image CURR, thus obtaining a corrected current image; and,
- a video stabilisation unit coupled to the rolling-shutter correction unit and configured to apply the video stabilisation correction parameter VStab_params to the corrected current image, thus obtaining the globally corrected current image.

In embodiments of the subject application, the apparatus 200 may further comprise a display unit which may be coupled to the apparatus 200 and configured to display at least the globally corrected current image.

The example of FIG. 4 as shown good results in rectifying and stabilising a video sequence. However, this may be further improved as illustrated in FIG. 6. Indeed, in FIG. 6 it is shown by the dashed arrow that in the embodiment of FIG. 4, video stabilisation uses, through the motion vector rectification process, a simulation of the motion estimation that would be performed between a previous original image (Previous Ori) and a rolling shutter rectified current image (Current RS-less). In contrast, in order to get to a similar performance as the sequential solution of FIG. 1, motion estimation used for video stabilisation need to be performed between a previous rolling shutter rectified image (Previous RS-less) and a rolling shutter rectified current image (Current RS-less).

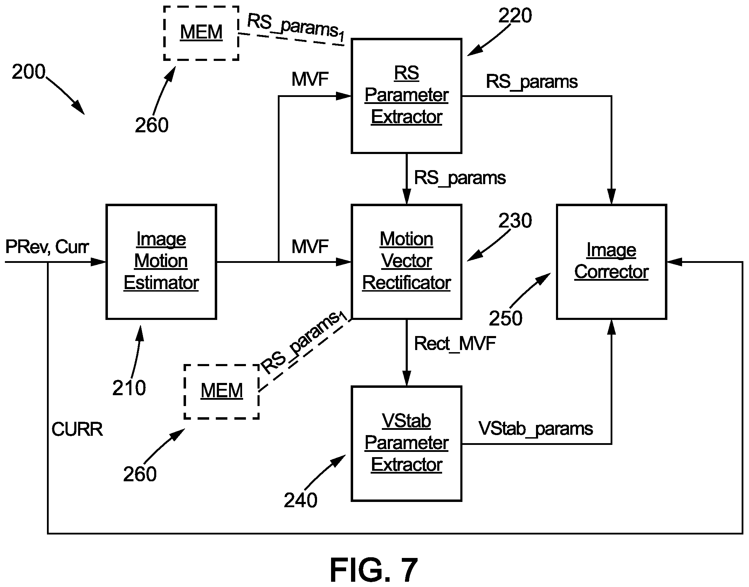

To address this need, referring now to FIG. 7, it is provided the apparatus 200 of FIG. 4 along with a memory unit 260 which may be coupled to either the rolling-shutter parameter extraction unit 220 or the motion vector rectification unit 230, for instance. In the example of FIG. 7, the memory unit 260 is configured for storing at least the first rolling-shutter correction parameter RS_params associated with the current image CURR and a previously obtained second rolling-shutter correction parameter RS_params₁ associated with the previous image PREV. Namely, the second rolling-shutter correction parameter RS_params₁ is indicative of the correction to be applied to the previous image PREV in order to reduce the rolling-shutter distortions.

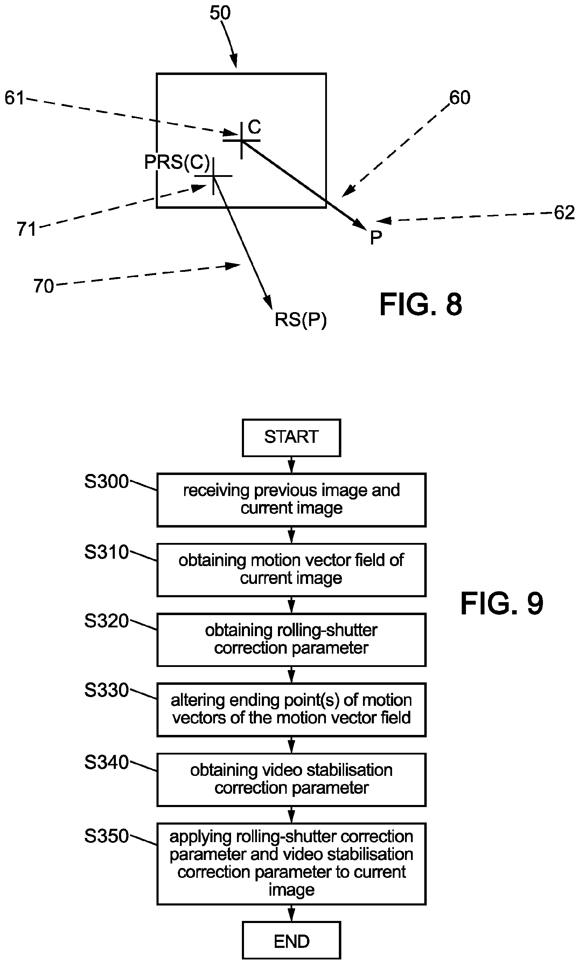

Referring to FIG. 7, the motion vector rectification unit 230 is further configured to alter the starting point 61 of the motion vectors 70 of the rectified motion vector field Rect_MVF based on the second rolling-shutter correction parameter RS_params₁. This results in the rectified motions vectors 70 as shown in FIG. 8. In the example of FIG. 8, the black arrow corresponds to a motion vector 60 of the motion vector field MVF and the grey arrow corresponds to a rectified vector 70 in the rectified motion vector field Rect_MVF. In FIG. 8, as can be clearly seen, in addition to the ending point 62 as already explained above, the starting point 61 has also been altered, moving from position 61 to position 71. Indeed point C has been moved to point PRS(C).

To summarise, the foregoing problem addressed by the subject application may be solved by simulating motion estimation on rolling shutter corrected images by altering the motion vector field MVF instead. By doing so it is taken advantage of the fact that the motion vector field obtained in the unit 140 in FIG. 1 is equivalent to the rectified motion vector field Rect_MVF. This way the apparatus 200 is able to perform both algorithms based on original images while in the sequential implementation of FIG. 2, original images are used for the rolling-algorithm and rolling shutter corrected images are used in video stabilisation.

Referring now to FIG. 9, there is diagrammatically shown therein a flow diagram of a method according to an embodiment of the subject application and with regard to apparatus 200 of FIG. 4.

In S300, it is received at least a previous image and a current image of a plurality of images acquired via a rolling-shutter mode of image capture, as already explained above.

In S310, it is obtained one motion vector field of the current image by performing motion estimation based on the previous image and the current image, as already explained above.

Then, in S320 it is obtained a rolling-shutter correction parameter of the current image based on the motion vector field, as already explained above.

Later in S330, it is altered the ending point of the motion vectors of the motion vector field based on the first rolling-shutter correction parameter, thus obtaining a rectified motion vector field, as already explained above.

In S340, it is obtained a video stabilisation correction parameter of the current image based on the rectified motion vector field, as already explained above.

Finally, in S350, it is applied to the current image, the rolling-shutter correction parameter and the video stabilisation correction parameter.

It is also claimed a non-transitory computer readable medium having stored thereon instructions for causing one or more processing units to execute the method according to FIG. 9 or the operations of apparatus 200 as illustrated in FIGs. 4 and 7.

The skilled person would appreciate that the proposed solution takes advantage of the fact that the rectified motion vector field Rect_MVF is equivalent to the motion vector field obtained in the unit 140 in FIG. 1 such that video stabilisation is performing similarly as in the sequential implementation of FIG. 1. In other words, advantages of the subject application include the following:
- only one motion estimation is performed for both algorithms, which saves a lot of computational time and resources. In particular, memory footprint and bandwidth may be divided by two compared with existing implementations. Indeed, in the proposed solution motion vectors are circulating between the two algorithms while in the prior art of FIG. 1, images are circulating;
- the same level of visual correction quality is kept as the sequential implementation of FIG. 1 since both video stabilization and rolling shutter algorithms keep their specificities in how they extract their needed information from the motion vectors.

Of course, the above advantages are exemplary, and these or other advantages may be achieved by the proposed solution. Further, the skilled person will appreciate that not all advantages stated above are necessarily achieved by embodiments described herein.

Any arrangement of devices to achieve the same functionality is effectively "associated" such that the desired functionality is achieved. Hence, any two devices herein combined to achieve a particular functionality may be seen as "associated with" each other such that the desired functionality is achieved, irrespective of architectures or intermediate devices. Likewise, any two devices so associated can also be viewed as being "operably connected," or "operably coupled," to each other to achieve the desired functionality.

Furthermore, those skilled in the art will recognize that boundaries between the above described operations are merely illustrative. The multiple operations may be combined into a single operation, a single operation may be distributed in additional operations and operations may be executed at least partially overlapping in time. Moreover, alternative embodiments may include multiple examples of a particular operation, and the order of operations may be altered in various other embodiments.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or operations then those listed in a claim. Furthermore, the terms "a" or "an," as used herein, are defined as one or as more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage. The subject application scope is defined in the following claims and the equivalents thereto. Furthermore, reference signs used in the description and claims do not limit the scope of the subject application as claimed.

The principles of various embodiments of the invention can be implemented as hardware, firmware, software or any combination thereof. Moreover, the software is preferably implemented as an application program tangibly embodied on a program storage unit, a non-transitory computer readable medium, or a non-transitory machine-readable storage medium that can be in a form of a digital circuit, an analogy circuit, a magnetic medium, or combination thereof. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

The foregoing detailed description has set forth a few of the many forms that the invention can take. It is intended that the foregoing detailed description be understood as an illustration of selected forms that the invention can take and not as a limitation to the definition of the invention. It is only the claims, including all equivalents that are intended to define the scope of this invention.

## Claims

1. An apparatus (200) for rectifying and stabilising a video sequence comprising a plurality of images acquired via a rolling-shutter mode of image capture, the apparatus comprising:
- an image motion estimation unit (210) configured to:
- receive at least a previous image, PREV, and a current image, CURR, of the plurality of images; and,
- obtain one motion vector field, MVF, of the current image by performing motion estimation based on the previous image and the current image, the motion vector field comprising motion vectors (60) of respective regions (50) of the current image wherein each motion vector comprises:
- a starting point (61) indicative of the source of motion of a respective region between the previous image and the current image; and,
- an ending point (62) indicative of the destination of motion of the respective region between the previous image and the current image;
- a rolling-shutter parameter extraction unit (220) coupled to the image motion estimation unit and configured to obtain a first rolling-shutter correction parameter, RS_params, of the current image based on the motion vector field only, the first rolling-shutter correction parameter being indicative of the correction to be applied to the current image in order to reduce rolling-shutter distortions;
- a motion vector rectification unit (230) coupled to the image motion estimation unit and the rolling-shutter parameter extraction unit, the motion vector rectification unit being configured to alter the ending point of the motion vectors of the motion vector field based on the first rolling-shutter correction parameter, thus obtaining a rectified motion vector field;
- a video stabilisation parameter extraction unit (240) coupled to the motion vector rectification unit and configured to obtain a video stabilisation correction parameter, VStab_params, of the current image based on the rectified motion vector field, the video stabilisation correction parameter being indicative of the rectification to be applied to the current image in order to reduce image jitters due to shake during image capture; and,
- an image correction unit (250) coupled to the rolling-shutter parameter extraction unit and the video stabilisation parameter extraction unit, the image correction unit being configured to:
- receive the current image; and,
- apply to the current image, the first rolling-shutter correction parameter and the video stabilisation correction parameter, thus obtaining a globally corrected current image.

2. The apparatus of claim 1 wherein the image correction unit comprises:
- a rolling-shutter correction unit configured to apply the first rolling-shutter correction parameter to the current image, thus obtaining a corrected current image; and,
- a video stabilisation unit coupled to the rolling-shutter correction unit and configured to apply the video stabilisation correction parameter to the corrected current image, thus obtaining the globally corrected current image.

3. The apparatus of any one of claims 1 to 2 further comprising:
- a memory unit (260) configured for storing at least the first rolling-shutter correction parameter associated with the current image and a previously obtained second rolling-shutter correction parameter associated with the previous image, the second rolling-shutter correction parameter being indicative of the correction to be applied to the previous image in order to reduce the rolling-shutter distortions;
wherein the motion vector rectification unit is further configured to alter the starting point of the motion vectors of the rectified motion vector field based on the second rolling-shutter correction parameter.

4. The apparatus of claim 3 wherein the memory unit is coupled to the motion vector rectification unit.

5. The apparatus of claim 3 wherein the memory unit is coupled to the rolling-shutter parameter extraction unit.

6. The apparatus of any one of claims 1 to 5, wherein,
- the first and second rolling-shutter correction parameters are obtained based on an image transformation of the motion vector field such as an homography or affine transformation; and,
- the video stabilisation correction parameter is obtained based on an image transformation extracted from the rectified motion vector field, such as an homography transformation or a combination of translation and rotation.

7. The apparatus of any one of claims 1 to 6 further comprising a metal oxide semiconductor-based, CMOS, image sensor coupled to the image motion estimation unit and the image correction unit, the CMOS image sensor being configured for capturing the plurality of images.

8. A video processing device comprising:
- the apparatus of claim 7; and,
- a display unit coupled to the apparatus and configured to display at least the globally corrected current image.

9. A method of rectifying and stabilising a video sequence comprising a plurality of images acquired via a rolling-shutter mode of image capture, the method comprising:
- receiving (S300) at least a previous image and a current image of the plurality of images;
- obtaining (S310) one motion vector field of the current image by performing motion estimation based on the previous image and the current image, the motion vector field comprising motion vectors of respective regions of the current image wherein each motion vector comprises:
- a starting point indicative of the source of motion of a respective region between the previous image and the current image; and,
- an ending point indicative of the destination of motion of the respective region between the previous image and the current image;
- obtaining (S320) a first rolling-shutter correction parameter of the current image based on the motion vector field only, the first rolling-shutter correction parameter being indicative of the correction to be applied to the current image in order to reduce rolling-shutter distortions;
- altering (S330) the ending point of the motion vectors of the motion vector field based on the first rolling-shutter correction parameter, thus obtaining a rectified motion vector field;
- obtaining (S340) a video stabilisation correction parameter of the current image based on the rectified motion vector field, the video stabilisation correction parameter being indicative of the correction to be applied to the current image in order to reduce image jitters due to shake during image capture; and,
- applying (S350) to the current image, the first rolling-shutter correction parameter and the video stabilisation correction parameter.

10. The method of claim 9 wherein applying the first rolling-shutter correction parameter to the current image is performed before applying the video stabilisation correction parameter to the corrected current image.

11. The method of any one of claims 9 to 10 further comprising:
- storing at least the first rolling-shutter correction parameter associated with the current image and a previously obtained second rolling-shutter correction parameter associated with the previous image, the second rolling-shutter correction parameter being indicative of the correction to be applied to the previous image in order to reduce the rolling-shutter distortions; and,
- altering the starting point of the motion vectors of the rectified motion vector field based on the second rolling-shutter correction parameter.

12. The method of any one of claims 9 to 11, wherein,
- the first and second rolling-shutter correction parameters are obtained based on an image transformation of the motion vector field such as an homography or affine transformation; and,
- the video stabilisation correction parameter is obtained based on an image transformation extracted from the rectified motion vector field such as an homography transformation or a combination of translation and rotation.

13. A non-transitory computer readable medium having stored thereon instructions for causing one or more processing units to execute the method according to claims 9 to 12.

## Patentansprüche

1. Vorrichtung (200) zur Rektifikation und Stabilisierung einer Videosequenz, die eine Vielzahl an Bildern umfasst, die mittels eines Rolling-Shutter-Modus der Bildaufnahme erhalten wurden, wobei die Vorrichtung umfasst:
- eine Bildbewegungs-Abschätzeinheit (210), gestaltet, um
- mindestens ein vorhergehendes Bild, PREV, und ein aktuelles Bild, CURR, der Vielzahl an Bildern zu empfangen; und,
- ein Bewegungsvektorfeld, MVF, des aktuellen Bildes mittels der Durchführung einer Bewegungsabschätzung, basierend auf dem vorhergehenden Bild und dem aktuellen Bild, zu erhalten, wobei das Bewegungsvektorfeld Bewegungsvektoren (60) entsprechender Bereiche (50) des aktuellen Bildes umfasst, wobei jeder Bewegungsvektor umfasst:
- einen Ausgangspunkt (61), der auf die Quelle der Bewegung eines entsprechenden Bereichs zwischen dem vorhergehenden Bild und dem aktuellen Bild hinweist; und
- einen Endpunkt (62), der auf den Zielort der Bewegung des entsprechenden Bereichs zwischen dem vorhergehenden Bild und dem aktuellen Bild hinweist;
- eine Rolling-Shutter-Parameterextraktionseinheit (220), die an die Bildbewegungs-Abschätzeinheit gekoppelt und gestaltet ist, um einen ersten Rolling-Shutter-Korrekturparameter, RS_params, des aktuellen Bildes, lediglich basierend auf dem Bewegungsvektorfeld, zu erhalten, wobei der erste Rolling-Shutter-Korrekturparameter auf die Korrektur hinweist, der das vorhergehende Bild unterzogen werden muss, um die Rolling-Shutter-Verzerrungen zu reduzieren;
- eine Bewegungsvektor-Rektifikationseinheit (230), gekoppelt an die Bildbewegungs-Abschätzeinheit und die Rolling-Shutter-Parameterextraktionseinheit, wobei die Bewegungsvektor-Rektifikationseinheit gestaltet ist, um den Endpunkt der Bewegungsvektoren des Bewegungsvektorfeldes basierend auf den ersten Rolling-Shutter-Korrekturparameter zu ändern, um dadurch ein berichtigtes bzw. rektifiziertes Bewegungsvektorfeld zu erhalten;
- eine Videostabilisierungs-Parameterextraktionseinheit (240), gekoppelt an die Bewegungsvektor-Rektifikationseinheit und gestaltet, um einen Videostabilisierungs-Korrekturparameter, VStab_params, des aktuellen Bildes basierend auf dem berichtigten Bewegungsvektorfeld zu erhalten, wobei der Videostabilisierungs-Korrekturparameter auf die Rektifikation hinweist, der das aktuelle Bild unterzogen werden muss, um die aufgrund eines Wackelns bei der Bildaufnahme entstandenen Bildjitter zu reduzieren; und,
- eine Bildkorrektureinheit (250), gekoppelt an die Rolling-Shutter-Parameterextraktionseinheit und die Videostabilisierungs-Parameterextraktionseinheit, wobei die Bildkorrektureinheit gestaltet ist, um:
- das aktuelle Bild zu erhalten; und
- auf das aktuelle Bild den ersten Rolling-Shutter-Korrekturparameter und den Videostabilisierungs-Korrekturparameter anzuwenden, um dadurch ein umfassend korrigiertes aktuelles Bild zu erhalten.

2. Vorrichtung nach Anspruch 1, wobei die Bildkorrektureinheit umfasst:
- eine Rolling-Shutter-Korrektureinheit, gestaltet, um den ersten Rolling-Shutter-Korrekturparameter auf das aktuelle Bild anzuwenden, wodurch ein korrigiertes aktuelles Bild erhalten wird; und,
- eine Videostabilisierungseinheit, gekoppelt an die Rolling-Shutter-Korrektureinheit, und gestaltet, um die Videostabilisierungs-Korrekturparameter auf das korrigierte aktuelle Bild anzuwenden, um dadurch das umfassend korrigierte aktuelle Bild zu erhalten.

3. Vorrichtung nach einem der Ansprüche 1 bis 2, des Weiteren umfassend:
- eine Speichereinheit (260), gestaltet zum Speichern von mindestens des mit dem aktuellen Bild assoziierten ersten Rolling-Shutter-Korrekturparameters und eines mit dem vorhergehenden Bild assoziierten vorhergehend erhaltenen zweiten Rolling-Shutter-Korrekturparameters, wobei der zweite Rolling-Shutter-Korrekturparameter auf die Korrektur hinweist, der das vorhergehende Bild unterzogen werden muss, um die Rolling-Shutter-Verzerrungen zu reduzieren;
wobei die Bewegungsvektor-Rektifikationseinheit des Weiteren gestaltet ist, um den Ausgangspunkt der Bewegungsvektoren des berichtigten Bewegungsvektorfeldes basierend auf dem zweiten Rolling-Shutter-Korrekturparameter zu ändern.

4. Vorrichtung nach Anspruch 3, wobei die Speichereinheit an die Bewegungsvektor-Rektifikationseinheit gekoppelt ist.

5. Vorrichtung nach Anspruch 3, wobei die Speichereinheit an die Rolling-Shutter-Parameterextraktionseinheit gekoppelt ist.

6. Vorrichtung nach einem der Ansprüche 1 bis 5, wobei
- die ersten und die zweiten Rolling-Shutter-Korrekturparameter basierend auf einer Bildtransformation des Bewegungsvektorfeldes, wie eine Homografie oder eine affine Transformation, erhalten werden; und,
- der Videostabilisierungs-Korrekturparameter basierend auf einer von dem berichtigten Bewegungsvektorfeld extrahierten Bildtransformation, wie einer Homografie-Transformation oder einer Kombination aus Translation und Rotation, erhalten wird.

7. Vorrichtung nach einem der Ansprüche 1 bis 6, des Weiteren einen auf einem Metalloxidhalbleiter-basierenden, CMOS, Bildsensor umfassend, der an die Bildbewegungs-Abschätzungseinheit und die Bildkorrektureinheit gekoppelt ist, wobei der CMOS-Bildsensor zur Aufnahme einer Vielzahl an Bildern ausgestaltet ist.

8. Videobearbeitungsvorrichtung, umfassend:
- die Vorrichtung von Anspruch 7; und,
- eine Displayeinheit, gekoppelt an die Vorrichtung und gestaltet, um mindestens das umfassend korrigierte aktuelle Bild anzuzeigen.

9. Verfahren der Rektifikation und Stabilisierung einer Videosequenz, umfassend eine Vielzahl an Bildern, erfasst mittels eines Rolling-Shutter-Modus der Bildaufnahme, wobei das Verfahren umfasst:
- Empfang (S300) von mindestens einem vorhergehenden Bild und einem aktuellen Bild der Vielzahl an Bildern;
- Erhalt (S310) eines Bewegungsvektorfeldes des aktuellen Bildes mittels der Durchführung einer Bewegungsabschätzung basierend auf dem vorhergehenden Bild und dem aktuellen Bild, wobei das Bewegungsvektorfeld Bewegungsvektoren entsprechender Bereiche des aktuellen Bildes umfasst, wobei jeder Bewegungsvektor umfasst:
- einen Ausgangspunkt (61), der auf die Quelle der Bewegung eines entsprechenden Bereichs zwischen dem vorhergehenden Bild und dem aktuellen Bild hinweist; und
- einen Endpunkt (62), der auf den Zielort der Bewegung des entsprechenden Bereichs zwischen dem vorhergehenden Bild und dem aktuellen Bild hinweist;
- Erhalt (S320) eines ersten Rolling-Shutter-Korrekturparameters des aktuellen Bildes, lediglich auf dem Bewegungsvektorfeld basierend, wobei der erste Rolling-Shutter-Korrekturparameter auf die Korrektur hinweist, der das aktuelle Bild unterzogen werden muss, um Roller-Shutter-Verzerrungen zu reduzieren;
- Ändern (S330) des Endpunkts der Bewegungsvektoren des Bewegungsvektorfeldes basierend auf dem ersten Rolling-Shutter-Korrekturparameter, um dadurch ein berichtigtes Bewegungsvektorfeld zu erhalten;
- Erhalt (S340) eines Videostabilisierungs-Korrekturparameters des aktuellen Bildes basierend auf dem berichtigten Bewegungsvektorfeld, wobei der Videostabilisierungs-Korrekturparameter auf die Korrektur hinweist, der das aktuelle Bild unterzogen werden muss, um die aufgrund eines Wackelns bei der Bildaufnahme entstandenen Bildjitter zu reduzieren; und,
- Anwenden (S350) des ersten Rolling-Shutter-Korrekturparameters und des Videostabilisierungs-Korrekturparameters auf das aktuelle Bild.

10. Verfahren nach Anspruch 9, wobei das Anwenden des ersten Rolling-Shutter-Korrekturparameters auf das aktuelle Bild durchgeführt wird, bevor der Videostabilisierungs-Korrekturparameter auf das korrigierte aktuelle Bild angewandt wird.

11. Verfahren nach einem der Ansprüche 9 bis 10, des Weiteren umfassend:
- Speicherung von mindestens des mit dem aktuellen Bild assoziierten ersten Rolling-Shutter-Korrekturparameters und eines mit dem vorhergehenden Bild assoziierten vorhergehend erhaltenen zweiten Rolling-Shutter-Korrekturparameters, wobei der zweite Rolling-Shutter-Korrekturparameter auf die Korrektur hinweist, der das vorhergehende Bild unterzogen werden muss, um die Rolling-Shutter-Verzerrungen zu reduzieren; und,
Ändern des Ausgangspunktes der Bewegungsvektoren des berichtigten Bewegungsvektorfeldes basierend auf dem zweiten Rolling-Shutter-Korrekturparameter.

12. Verfahren nach einem der Ansprüche 9 bis 11, wobei,
- die ersten und zweiten Rolling-Shutter-Korrekturparameter basierend auf einer Bildtransformation des Bewegungsvektorfeldes, wie eine Homografie oder eine affine Transformation, erhalten werden; und,
- der Videostabilisierungs-Korrekturparameter basierend auf einer von dem berichtigten Bewegungsvektorfeld extrahierten Bildtransformation, wie eine Homografie-Transformation oder eine Kombination von Translation und Rotation, erhalten wird.

13. Dauerhafter computer-lesbarer Datenträger mit darauf gespeicherten Anweisungen zur Veranlassung einer oder mehrerer Bearbeitungseinheiten das Verfahren nach den Ansprüchen 9 bis 12 auszuführen.

## Revendications

1. Appareil (200) de redressement et de stabilisation d'une séquence vidéo comprenant une pluralité d'images acquises en mode d'acquisition d'image « obturateur roulant », l'appareil comprenant :
- une unité d'estimation de déplacement d'image (210) conçue pour :
- recevoir au moins une image précédente, PREV, et une image actuelle, CURR, de la pluralité d'images ; et
- obtenir un champ de vecteurs de déplacement, MFV, de l'image actuelle en procédant à une estimation de déplacement à partir de l'image précédente et de l'image actuelle, le champ de vecteurs de déplacement comprenant des vecteurs de déplacement (60) de zones respectives (50) de l'image actuelle, chaque vecteur de déplacement comprenant :
- un point de départ (61) indiquant l'origine de déplacement d'une zone respective entre l'image précédente et l'image actuelle ; et
- un point d'arrivée (62) indiquant la destination de déplacement de la zone respective entre l'image précédente et l'image actuelle ;
- une unité d'extraction de paramètre d'obturateur roulant (220) couplée à l'unité d'estimation de déplacement d'image et conçue pour obtenir un premier paramètre de correction d'obturateur roulant, RS_params, de l'image actuelle sur la base du champ de vecteurs de déplacement uniquement, le premier paramètre de correction d'obturateur roulant indiquant la correction à appliquer à l'image actuelle pour réduire les distorsions dues à l'obturateur roulant ;
- une unité de redressement de vecteurs de déplacement (230) couplée à l'unité d'estimation de déplacement d'image et à l'unité d'extraction de paramètre d'obturateur roulant, l'unité de redressement de vecteurs de déplacement étant conçue pour modifier le point d'arrivée des vecteurs de déplacement du champ de vecteurs de déplacement en fonction du premier paramètre de correction d'obturateur roulant, obtenant ainsi un champ de vecteurs de déplacement redressé ;
- une unité d'extraction de paramètre de stabilisation vidéo (240) couplée à l'unité de redressement de vecteurs de déplacement et conçue pour obtenir un paramètre de correction de stabilisation vidéo, VStab_params, de l'image actuelle sur la base du champ de vecteurs de déplacement rectifié, le paramètre de correction de stabilisation vidéo indiquant le redressement à appliquer à l'image actuelle pour réduire le sautillement de l'image dû aux secousses pendant l'acquisition d'image ; et
- une unité de correction d'image (250) couplée à l'unité d'extraction de paramètre d'obturateur roulant et à l'unité d'extraction de paramètre de stabilisation vidéo, l'unité de correction d'image étant conçue pour :
- recevoir l'image actuelle ; et
- appliquer à l'image actuelle le premier paramètre de correction d'obturateur roulant et le paramètre de correction de stabilisation vidéo, obtenant ainsi une image actuelle globalement corrigée.

2. Appareil selon la revendication 1, l'unité de correction d'image comprenant :
- une unité de correction d'obturateur roulant conçue pour appliquer le premier paramètre de correction d'obturateur roulant à l'image actuelle, obtenant ainsi une image actuelle corrigée ; et
- une unité de stabilisation vidéo couplée à l'unité de correction d'obturateur roulant et conçue pour appliquer le paramètre de correction de stabilisation vidéo à l'image actuelle corrigée, obtenant ainsi l'image actuelle globalement corrigée.

3. Appareil selon l'une quelconque des revendications 1 et 2, comprenant, en outre :
- une unité de mémoire (260) conçue pour mémoriser au moins le premier paramètre de correction d'obturateur roulant associé à l'image actuelle et un second paramètre de correction d'obturateur roulant obtenu antérieurement associé à l'image précédente, le second paramètre de correction d'obturateur roulant indiquant la correction à appliquer à l'image précédente pour réduire les distorsions dues à l'obturateur roulant ;
l'unité de rectification de vecteurs de déplacement étant en outre conçue pour modifier le point de départ des vecteurs de déplacement du champ de vecteurs de déplacement rectifié en fonction du second paramètre de correction d'obturateur roulant.

4. Appareil selon la revendication 3, l'unité de mémoire étant couplée à l'unité de rectification de vecteurs de déplacement.

5. Appareil selon la revendication 3, l'unité de mémoire étant couplée à l'unité d'extraction de paramètre d'obturateur roulant.

6. Appareil selon l'une quelconque des revendications 1 à 5 :
- les premier et second paramètres de correction d'obturateur roulant étant obtenus grâce à une transformation d'image du champ de vecteurs de déplacement telle une homographie ou une transformation affine ; et
- le paramètre de correction de stabilisation vidéo étant obtenu grâce à une transformation d'image extraite du champ de vecteurs de redressement rectifié, telle une transformation homographique ou une combinaison de translation et de rotation.

7. Appareil selon l'une quelconque des revendications 1 à 6, comprenant, en outre, un capteur d'image à métal-oxyde semi-conducteur, CMOS, couplé à l'unité d'estimation de déplacement d'image et à l'unité de correction d'image, le capteur d'image CMOS étant conçu pour acquérir la pluralité d'images.

8. Dispositif de traitement vidéo comprenant :
- l'appareil selon la revendication 7 ; et
- une unité d'affichage couplée à l'appareil et conçue pour afficher au moins l'image actuelle globalement corrigée.

9. Procédé de redressement et de stabilisation d'une séquence vidéo comprenant une pluralité d'images acquises en mode d'acquisition d'image « obturateur roulant », le procédé comprenant :
- la réception (S300) d'au moins une image précédente et une image actuelle de la pluralité d'images ;
- l'obtention (S310) d'un champ de vecteurs de déplacement de l'image courante en procédant à une estimation de déplacement à partir de l'image précédente et de l'image actuelle, le champ de vecteurs de déplacement comprenant des vecteurs de déplacement de zones respectives de l'image actuelle, chaque vecteur de déplacement comprenant :
- un point de départ indiquant l'origine de déplacement d'une zone respective entre l'image précédente et l'image actuelle ; et
- un point d'arrivée indiquant la destination de déplacement de la zone respective entre l'image précédente et l'image actuelle ;
- l'obtention (S320) d'un premier paramètre de correction d'obturateur roulant de l'image actuelle sur la base du champ de vecteurs de déplacement uniquement, le premier paramètre de correction d'obturateur roulant indiquant la correction à appliquer à l'image actuelle pour réduire les distorsions dues à l'obturateur roulant ;
- la modification (S330) du point d'arrivée des vecteurs de déplacement du champ de vecteurs de déplacement en fonction du premier paramètre de correction d'obturateur roulant, obtenant ainsi un champ de vecteurs de déplacement rectifié ;
- l'obtention (S340) d'un paramètre de correction de stabilisation vidéo de l'image actuelle sur la base du champ de vecteurs de déplacement rectifié, le paramètre de correction de stabilisation vidéo indiquant la correction à appliquer à l'image actuelle pour réduire le sautillement de l'image dû aux secousses pendant l'acquisition de l'image ; et
- l'application (S350) à l'image actuelle du premier paramètre de correction d'obturateur roulant et du paramètre de correction de stabilisation vidéo.

10. Procédé selon la revendication 9, l'application du premier paramètre de correction d'obturateur roulant à l'image actuelle intervenant avant l'application du paramètre de correction de stabilisation vidéo à l'image actuelle corrigée.

11. Procédé selon l'une quelconque des revendications 9 à 10, comprenant, en outre :
- la mémorisation d'au moins le premier paramètre de correction d'obturateur roulant associé à l'image actuelle et d'un second paramètre de correction d'obturateur roulant obtenu antérieurement associé à l'image précédente, le second paramètre de correction d'obturateur roulant indiquant la correction à appliquer à l'image précédente pour réduire les distorsions dues à l'obturateur roulant ; et
- la modification du point de départ des vecteurs de déplacement du champ de vecteurs de déplacement rectifié en fonction du second paramètre de correction d'obturateur roulant.

12. Procédé selon l'une quelconque des revendications 9 à 11 :
- les premier et second paramètres de correction d'obturateur roulant étant obtenus grâce à une transformation d'image du champ de vecteurs de déplacement telle une homographie ou une transformation affine ; et
- le paramètre de correction de stabilisation vidéo étant obtenu grâce à une transformation d'image extraite du champ de vecteurs de déplacement rectifié telle une transformation homographique ou une combinaison de translation et de rotation.

13. Support non transitoire lisible sur ordinateur, sur lequel sont mémorisées des instructions destinées à provoquer l'exécution du procédé selon les revendications 9 à 12 par une ou plusieurs unités de traitement.
